# EUROPEAN PATENT APPLICATION

(11) **EP 4 641 934 A1**
(43) Date of publication of application: **29.10.2025**
(21) Application number: 23909126.7
(22) Date of filing: 18.07.2023
(51) Int. Cl.: H04B 1/16

(54) **SIGNAL PROCESSING AND TRANSMISSION SYSTEM, SIGNAL PROCESSING METHOD AND APPARATUS, AND STORAGE MEDIUM**

(30) Priority: 27.12.2022 CN 202211685009
(71) Applicant: ZTE CORPORATION, Shenzhen, Guangdong 518057 (CN)
(72) Inventor: YIN, Min, Shenzhen, Guangdong 518057 (CN); BAI, Yanmin, Shenzhen, Guangdong 518057 (CN); TANG, Xue, Shenzhen, Guangdong 518057 (CN)
(74) Representative: Ziebig Hengelhaupt Intellectual Property Attorneys Patentanwaltskanzlei PartGmbB
(86) International application number: PCT/CN2023/107978
(87) International publication number: WO 2024/139183

(57) **Abstract**

The embodiments of the present invention relate to the technical field of communications, and in particular to a signal processing and transmission system, a signal processing method and apparatus, and a storage medium. The system comprises a signal processing module, a plurality of radio frequency link modules, a plurality of near-end photoelectric conversion modules, a plurality of far-end photoelectric conversion modules, and a radio frequency combination module, wherein the signal processing module is configured to split a broadband digital signal into a plurality of narrowband digital signals, and convert the plurality of narrowband digital signals into a plurality of radio frequency signals; the radio frequency link modules are configured to perform signal adjustment processing on corresponding radio frequency signals; the near-end photoelectric conversion modules are configured to convert into optical signals the corresponding radio frequency signals that have been subjected to signal adjustment processing, each optical signal being transmitted to a corresponding far-end photoelectric conversion module by means of an optical fiber; the far-end photoelectric conversion modules are configured to convert the received optical signals into electrical signals; and the radio frequency combination module is configured to perform combination processing on the electrical signals, so as to obtain a target signal.

## Description

### TECHNICAL FIELD

The embodiments of the present disclosure relate to the technical field of communications, and in particular to a signal processing and transmission system, a signal processing method and apparatus, and a storage medium.

### BACKGROUD

With the rapid development of wireless mobile communication technology, the demand for high-speed broadband of signals and the performance requirement for broadband signals are increasingly growing. In view of this, the performance of radio frequency devices needs to be improved accordingly, so as to meet the requirements for high-speed broadband and high-performance of signals. At present, in order to implement signals with high-speed broadband and high performance, a hardware circuit of a corresponding radio frequency device is complex and the performance pressure is high.

Therefore, how to reduce the performance pressure of a radio frequency device has become an urgent problem to be solved.

### SUMMARY

The embodiments of the present disclosure provide a signal processing and transmission system, a signal processing method and apparatus, and a storage medium, which is intended to reduce performance pressure of a radio frequency device.

The embodiments of the present disclosure provide a signal processing and transmission system, the signal processing and transmission system includes a signal processing module, a plurality of radio frequency link modules, a plurality of near-end photoelectric conversion modules, a far-end photoelectric conversion module corresponding to each of the near-end photoelectric conversion modules, and a radio frequency combination module, wherein the signal processing module is configured to divide a broadband digital signal into a plurality of narrowband digital signals, and convert the plurality of narrowband digital signals into a plurality of radio frequency signals with non-overlapping frequency bands; each of the radio frequency link modules is configured to perform signal adjustment processing on a corresponding one of the radio frequency signals; each of the near-end photoelectric conversion modules is configured to convert corresponding radio frequency signals that have been subjected to signal adjustment processing into optical signals, each of the optical signals is transmitted to a corresponding far-end photoelectric conversion module by an optical fiber; each of the far-end photoelectric conversion modules is configured to convert the received optical signals into electrical signals; and the radio frequency combination module is configured to perform combination processing on the individual electrical signals, so as to obtain a target signal.

The embodiments of the present disclosure further provide a signal processing method, applied to the signal processing and transmission system described above, the method includes: determining at least one frequency division point corresponding to a broadband digital signal; dividing the broadband digital signal into a plurality of narrowband digital signals based on the at least one frequency division point;
converting the plurality of narrowband digital signals into a plurality of radio frequency signals with non-overlapping frequency bands; and performing signal processing and then combination processing on each of the radio frequency signals to obtain a target signal.

The embodiments of the present disclosure further provide a signal processing apparatus, the signal processing apparatus includes a processor and a memory, the memory is configured to store a program, the processor is configured to execute the program and implement the signal processing method as described above when executing the program.

The embodiments of the present disclosure further provide a storage medium for readable storage, the storage medium stores one or more programs, and the one or more programs can be executed by one or more processors, so as to implement the signal processing method as described above.

It should be understood that both the foregoing general description and the following detailed description are merely exemplary and explanatory, and are not intended to limit the disclosure.

### BRIEF DESCRIPTION OF THE DRAWINGS

In order to more clearly illustrate the technical solutions in the embodiments of the present disclosure, the drawings required for use in the description of the embodiments will be briefly introduced below, obviously, the drawings described below are some embodiments of the present disclosure, and other drawings can be obtained by those skilled in the art based on these drawings without involving creative work.
FIG. 1 is a schematic structural block diagram of a signal processing and transmission system provided by an embodiment of the present disclosure;
FIG. 2 is a schematic structural block diagram of another signal processing and transmission system provided by an embodiment of the present disclosure;
FIG. 3 is a schematic flow chart of digital signal division provided by an embodiment of the present disclosure;
FIG. 4 is a schematic structural block diagram of another signal processing and transmission system provided by an embodiment of the present disclosure;
FIG. 5 is a schematic flow chart of a signal processing method provided by an embodiment of the present disclosure;
FIG. 6 is a schematic flow chart of determining at least one frequency division point corresponding to a broadband digital signal provided by an embodiment of the present disclosure; and
FIG. 7 is a schematic structural block diagram of a signal processing apparatus provided by an embodiment of the present disclosure.

### DETAILED DESCRIPTION

Technical solutions in embodiments of the present disclosure will be described clearly and thoroughly below with reference to the accompanying drawings in embodiments of the present disclosure. Obviously, the embodiments described are part of the embodiments of the present disclosure rather than all of the embodiments. All other embodiments obtained by those skilled in the art without creative work based on embodiments in the present disclosure fall within the scope of the present disclosure.

The flowcharts shown in the accompanying drawings are only examples and do not necessarily include all the contents and operations/steps, nor do they have to be performed in the order described. For example, some operations/steps may also be decomposed, combined or partially merged, thus the order actually performed may change according to actual conditions.

It should be understood that the terms used in the description of the present disclosure are only for the purpose of describing specific embodiments and are not intended to limit the present disclosure. As used in the description of the present disclosure and the appended claims, the singular forms "a", "an" and "the" are intended to include plural forms unless the context clearly indicates otherwise.

It should also be understood that the term "and/or" used in the description of the present disclosure and the appended claims refers to any combination and all possible combinations of one or more of the associated listed items, and includes these combinations.

It should be understood that the specific embodiments described here are merely used to illustrate the present disclosure and not intended to be limiting.

In the subsequent description, the use of suffixes such as "module", "component" or "unit" to represent elements is merely for facilitating the description of the present disclosure, and has no particular meanings per se. Therefore, "module", "component" or "unit" can be used in a mixed manner.

The embodiments of the present disclosure provide a signal processing and transmission system, a signal processing method and apparatus, and a storage medium. The signal processing method may be applied to a signal processing and transmission system, which can reduce the performance pressure of a radio frequency device while implementing signals with high-speed broadband and high performance.

Some embodiments of the present disclosure will be described in detail below in conjunction with the accompanying drawings. The following embodiments and features in the embodiments may be combined with each other without conflict.

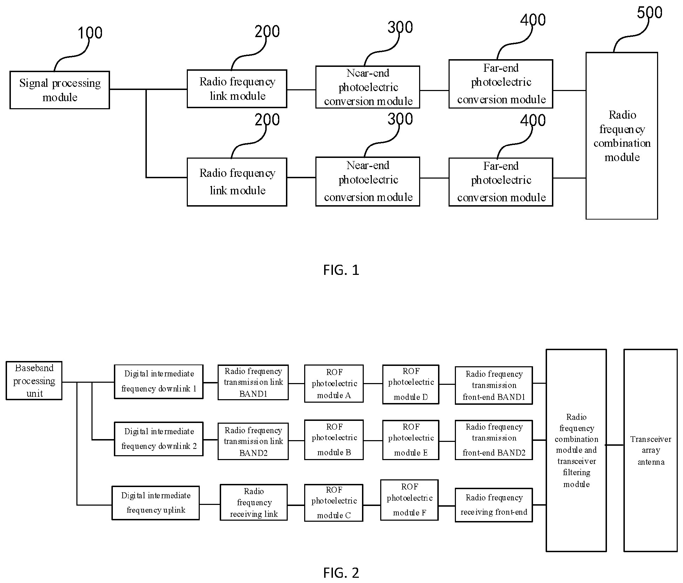

Referring to FIG. 1, FIG. 1 is a schematic structural block diagram of a signal processing and transmission system provided by an embodiment of the present disclosure. As shown in FIG. 1, the signal processing and transmission system includes a signal processing module 100, a plurality of radio frequency link modules 200, a plurality of near-end photoelectric conversion modules 300, a far-end photoelectric conversion module 400 corresponding to each of the near-end photoelectric conversion modules 300, and a radio frequency combination module 500.

The signal processing module 100 is configured to perform processing on a signal, divide a broadband digital signal into a plurality of narrowband digital signals, and perform digital-to-analog signal conversion, converting the plurality of narrowband digital signals into a plurality of corresponding radio frequency signals, wherein frequency bands of the plurality of radio frequency signals do not overlap. For the plurality of radio frequency signals, each radio frequency signal is subjected to signal adjustment processing by a corresponding radio frequency link module 200.

By way of example, the radio frequency link module 200 include a first radio frequency link module and a second radio frequency link module, the plurality of radio frequency signals include a first radio frequency signal and a second radio frequency signal, the first radio frequency signal is subjected to signal adjustment processing by the first radio frequency link module, and the second radio frequency signal is subjected to signal adjustment processing by the second radio frequency link module.

Then, the radio frequency signal that has been subjected to signal adjustment processing is converted into an optical signal of corresponding wavelength by a corresponding near-end photoelectric conversion module 300. By way of example, the near-end photoelectric conversion module 300 includes, but is not limited to, a ROF (Radio Over Fiber) photoelectric module, and an analog signal is converted into an optical signal of a corresponding wavelength by the ROF photoelectric module.

Each optical signal is transmitted to a corresponding far-end photoelectric conversion module 400 by an optical fiber, wherein each far-end photoelectric conversion module 400 corresponds to a corresponding near-end photoelectric conversion module 300. The transmitted optical signal is converted into an electrical signal by the far-end photoelectric conversion module 400, and then the individual electrical signals are combined by the radio frequency combination module 500, so as to generate a signal with high-speed broadband and high performance, i.e., a target signal. Compared with directly processing and transmitting a signal with high-speed broadband, dividing a signal and then processing and transmitting the signal can reduce the performance pressure of a radio frequency device.

In some embodiments, the signal processing and transmission system further includes a plurality of radio frequency front-end modules 600 corresponding to the plurality of radio frequency link modules 200. By way of example, each radio frequency front-end module 600 is disposed between the far-end photoelectric conversion module 400 and the radio frequency combination module 500. After an optical signal is converted into an electrical signal by the far-end photoelectric conversion module 400, a corresponding radio frequency front-end module 600 performs signal adjustment processing on the electrical signal, wherein the signal adjustment processing includes, but is not limited to, power control, gain adjustment, etc. After the plurality of radio frequency front-end modules 600 perform radio frequency signal adjustment processing on the plurality of electrical signals respectively, the radio frequency combination module 500 performs combination processing on the individual electrical signals that have been subjected to adjustment processing, so as to obtain a target signal of high-quality.

In some embodiments, the signal processing and transmission system further includes a transceiver filtering module 700 connected to the radio frequency combination module 500, after the radio frequency combination module 500 performs combination processing on individual electrical signals, the electrical signals that have been subjected to combination processing are filtered by the transceiver filtering module 700, so as to obtain a target signal of further high-quality.

In some embodiments, the signal processing module 100 includes a baseband processing unit and a digital intermediate frequency link, wherein the baseband processing unit is configured to complete baseband signal processing; and the digital intermediate frequency link is configured to complete conversion between a digital domain and an analog domain. By way of example, the digital intermediate frequency link includes a digital intermediate frequency downlink and a digital intermediate frequency uplink, wherein the number of digital intermediate frequency downlinks includes one and more than one. The radio frequency link module 200 includes a radio frequency transmission link and a radio frequency receiving link, wherein the radio frequency transmission link is configured to perform adjustment processing on a downlink analog signal, and the radio frequency receiving link is configured to perform adjustment processing on an uplink analog signal. By way of example, the number of radio frequency transmission links includes one and more than one. The radio frequency frond-end module 600 includes a radio frequency transmission frond-end and a radio frequency receiving frond-end, wherein the radio frequency transmission frond-end is configured to perform adjustment such as power control on a downlink analog signal, and the radio frequency receiving frond-end is configured to perform processing such as gain control on an uplink analog signal. By way of example, the number of radio frequency transmission frond-end may be more than one according to actual needs. The signal processing and transmission system further includes a transceiver array antenna, which is used to beamform a downlink signal for performing air interface transmission and to adjust the direction of array beam for receiving an uplink air interface signal.

For example, as shown in FIG. 2, the digital intermediate frequency downlink includes a digital intermediate frequency downlink 1 and a digital intermediate frequency downlink 2, the radio frequency transmission link includes a radio frequency transmission link BAND1 and a radio frequency transmission link BAND2, the near-end photoelectric conversion module 300 includes a ROF photoelectric module A (indoor), a ROF photoelectric module B (indoor), and a ROF photoelectric module C (indoor), the corresponding far-end photoelectric conversion module 400 includes a ROF photoelectric module D (outdoor), a ROF photoelectric module E (outdoor), and a ROF photoelectric module F (outdoor), and the radio frequency transmission front-end includes a radio frequency transmission front-end BAND1 and a radio frequency transmission front-end BAND2. In the signal processing and transmission system shown in FIG. 2, the workflow is as follows.

Firstly, the baseband processing unit completes the baseband digital signal processing so as to obtain a broadband digital signal, then the conversion between a digital domain and an analog domain is completed by the digital intermediate frequency link. The digital intermediate frequency downlink divides a digital signal into two parts by digital signal filtering, it should be noted that theoretically it may be divided into n parts (n≥2). The digital intermediate frequency downlink 1 and the digital intermediate frequency downlink 2 perform digital-to-analog conversion on the divided digital signals respectively, convert them into corresponding radio frequency transmission links respectively, presenting as two radio frequency signals with non-overlapping but continuous frequency bands. The radio frequency transmission link BAND1 and the radio frequency transmission link BAND2 perform adjustment processing on the radio frequency signals respectively, and then convert corresponding radio frequency signals into optical signals of corresponding wavelengths by the ROF photoelectric module A and ROF photoelectric module B at the near-end. The digital intermediate frequency uplink corresponds to the radio frequency receiving link, and the ROF photoelectric module C converts an uplink optical signal of specific wavelength into an electrical signal. The optical signal is transmitted to the corresponding ROF photoelectric module D and ROF photoelectric module E at the far-end by an optical fiber, the ROF photoelectric module D and ROF photoelectric module E at the far-end convert a corresponding downlink optical signal into an electrical signal, and the ROF photoelectric module F at the far-end converts an uplink analog signal into an optical signal of corresponding wavelength. The radio frequency transmission front-end BAND1 and radio frequency transmitting front-end BAND2 perform adjustment such as power control on a corresponding downlink analog signal, that is, an electrical signal; the radio frequency receiving front-end performs processing such as gain control on an uplink analog signal. With the radio frequency combination module and the transceiver filtering module, the downlink analog signal and the uplink analog signal of the radio frequency transmission front-end BAND1, radio frequency transmission front-end BAND2 and the radio frequency receiving front-end are combined and filtered, thereby implementing a signal with high-speed broadband and high performance. Finally, the transceiver array antenna is used to beamform a downlink signal for performing air interface transmission and to adjust the direction of array beam for receiving an uplink air interface signal.

It should be noted that the radio frequency transmission link, the near-end ROF photoelectric module, and the corresponding far-end ROF photoelectric module may be flexibly combined according to actual needs and resources.

By dividing a digital signal and reasonably distributing and processing the divided signal, and using a ROF photoelectric module to convert an electrical signal into an optical signal and vice versa, a radio frequency signal is converted into an optical signal and then transmitted in an optical fiber, and then direct combination is performed at the radio frequency front-end, thereby implementing ultra-wide broadband and high performance, which not only reduces the performance pressure of a radio frequency device and simplifies the radio frequency hardware circuit, but also implements reproducibility of different radio frequency branches. In this way, there is no need to demand higher requirements for a radio frequency device due to increased application signal bandwidth, which greatly increases costs and may not even meet the requirements. At the same time, the digital intermediate frequency link and the radio frequency link in front of the power amplifier and the low noise amplifier in the AAU (Active Antenna Unit) are moved forward indoors, whereas the ROF module is of the same size as an ordinary optical module, which enables further significant miniaturization and weight reduction of the AAU architecture.

In some embodiments, the signal processing module 100 is configured to: determine whether to divide the broadband digital signal, and if so, divide the broadband digital signal into a plurality of narrowband digital signals.

It can be understood that a signal does not have to be divided in all application scenarios, therefore, in order to avoid an ineffective signal division operation, with respect to a current broadband digital signal, whether to divide the broadband digital signal is determined first, and only if it is determined to do so, the broadband digital signal is divided into a plurality of narrowband digital signals. Otherwise, when it is determined not to divide the broadband digital signal, the broadband digital signal is directly converted into a radio frequency signal and subjected to signal adjustment processing by one of the radio frequency link modules 200, and the other radio frequency link modules 200 enter an energy-saving mode.

In some embodiments, the signal processing module 100 is configured to: obtain a bandwidth F1 of a start frequency point and a cutoff frequency point corresponding to the broadband digital signal, a maximum signal half bandwidth F2, and a configured total bandwidth F3; if the F1 is greater than the F2 and the F3 is greater than the F2, determine to divide the broadband digital signal; or if the F1 is less than or equal to the F2, or the F3 is less than or equal to the F2, determine not to divide the broadband digital signal.

By way of example, a start frequency point and a cutoff frequency point corresponding to a broadband digital signal are obtained according to attribute information of the broadband digital signal. The attribute information includes, but is not limited to, a cell number to which the signal belongs, bandwidth, etc. The bandwidth F1 of the start frequency point and the cutoff frequency point is calculated and obtained according to the start frequency point and the cutoff frequency point. In addition, one-half of the maximum signal bandwidth, that is, the maximum signal half bandwidth F2, is determined according to the maximum signal bandwidth, and the configured total bandwidth F3 is obtained by query. F1 is compared with F2, if F1 is not greater than F2, that is, F1 is less than or equal to F2, then it is determined that the division of broadband digital signal will not be performed; if F1 is greater than F2, F2 is further compared with F3, if F3 is not greater than F2, that is, F3 is less than or equal to F2, then it is determined that the division of broadband digital signal will not be performed; if F3 is greater than F2, then it is determined to divide the broadband digital signal.

In some embodiments, the signal processing module 100 is configured to: determine at least one frequency division point corresponding to the broadband digital signal; and divide the broadband digital signal into a plurality of narrowband digital signals based on the at least one frequency division point.

By way of example, one or more frequency division points are determined based on signal parameters of the broadband digital signal. Wherein the signal parameters include, but are not limited to, frequency point information, bandwidth information, etc. Then, signal division is performed on the broadband digital signal based on the determined one or more frequency division points.

In some embodiments, the signal processing module 100 is configured to: calculate an intermediate frequency point f1 between the start frequency point and the cutoff frequency point; determine a highest frequency point f2 of a left adjacent carrier corresponding to the f1 and a lowest frequency point f3 of a right adjacent carrier corresponding to the f1; and determine one frequency division point according to the f2 and the f3; divide the broadband digital signal into a first narrowband digital signal and a second narrowband digital signal based on the one frequency division point.

By way of example, if it is determined to divide a broadband digital signal, an intermediate frequency point f1 between a start frequency point and a cutoff frequency point corresponding to the broadband digital signal is calculated, and a highest frequency point f2 of a left adjacent carrier corresponding to the intermediate frequency point f1 is determined based on the intermediate frequency point f1, that is, the highest frequency point f2 of the nearest complete carrier that is not greater than f1, and a lowest frequency point f3 of a right adjacent carrier corresponding to the intermediate frequency point f1 is calculated, that is, the lowest frequency point f3 of the nearest complete carrier that is not less than f1. Then, one corresponding frequency division point is determined based on the highest frequency point f2 and the lowest frequency point f3. Based on the determined frequency division point, the broadband digital signal is divided into a first narrowband digital signal and a second narrowband digital signal, that is, the broadband digital signal is divided into two parts.

In some embodiments, the signal processing module 100 is configured to: if the f2 is the same as the f3, then determine the f2 or f3 to be the frequency division point; or if the f2 is not the same as the f3, then calculate an intermediate frequency point f4 between the f2 and the f3, and determine the frequency division point according to the f4.

After obtaining the highest frequency point f2 and the lowest frequency point f3, the highest frequency point f2 is compared with the lowest frequency point f3; if the highest frequency point f2 is the same as the lowest frequency point f3, that is, f2 = f3, then f2 or f3 is determined as a frequency division point, and a broadband digital signal is divided into two parts based on f2 or f3. If the f2 is not the same as the f3, then an intermediate frequency point f4 between the f2 and the f3 is calculated, and the frequency division point is determined based on f4. By way of example, the frequency division point is obtained based on the value of f4 taken to an integral multiple of a minimum carrier interval, and the broadband digital signal is divided into two parts based on the frequency division point.

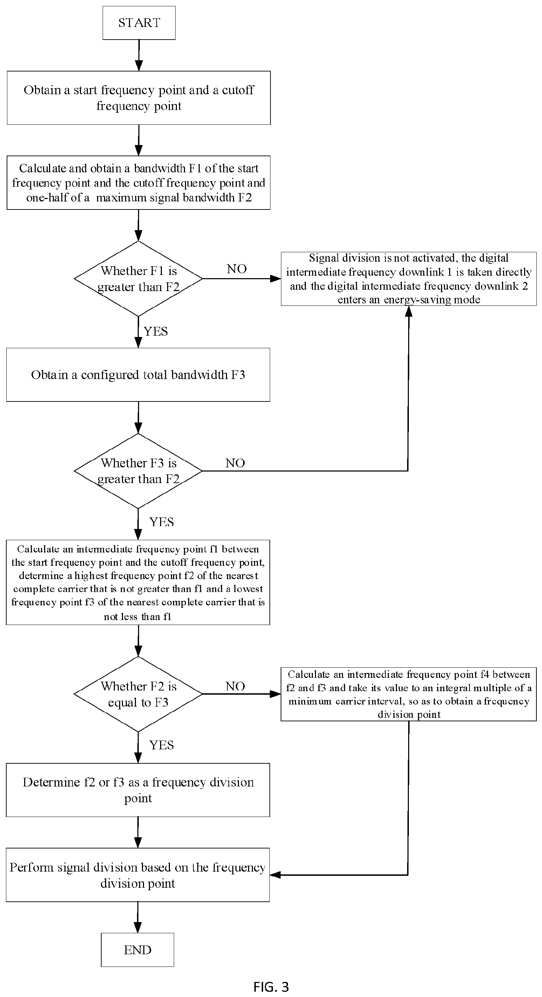

For example, as shown in FIG. 3, the process of dividing a digital signal is as follows.

A start frequency point and a cutoff frequency point corresponding to the signal are obtained according to an issued cell number and a corresponding bandwidth. Then, the bandwidth F1 of the start frequency point and the cutoff frequency point is calculated and obtained according to the start frequency point and the cutoff frequency point. In addition, one-half of the maximum signal bandwidth, that is, the maximum signal half bandwidth F2, is determined according to the maximum signal bandwidth. F1 is compared with F2 to determine whether F1 is greater than F2, if not, that is, F1 is less than or equal to F2, it is determined that signal division will not start, and the digital intermediate frequency downlink 1 is directly taken, and the digital intermediate frequency downlink 2 enters an energy-saving mode. On the contrary, if so, that is, F1 is greater than F2, then the configured total bandwidth F3 is obtained, and F2 is compared with F3 to determine whether F3 is greater than F2, if not, that is, F3 is less than or equal to F2, it is determined that signal division will not start, and the digital intermediate frequency downlink 1 is directly taken, and the digital intermediate frequency downlink 2 enters an energy-saving mode.

If so, that is, F3 is greater than F2, then it is determined to start signal division, an intermediate frequency point f1 between a start frequency point and a cutoff frequency point is calculated, and a highest frequency point f2 of a left adjacent carrier corresponding to the intermediate frequency point f1 is determined based on the intermediate frequency point f1, that is, the highest frequency point f2 of the nearest complete carrier that is not greater than f1, and a lowest frequency point f3 of a right adjacent carrier corresponding to the intermediate frequency point f1 is calculated, that is, the lowest frequency point f3 of the nearest complete carrier that is not less than f1. Then f2 is compared with f3 to determine whether f2 is the same as f3, if so, that is, f2 = f3, then f2 or f3 is determined as a frequency division point, and a signal is divided into two parts based on f2 or f3. On the contrary, if not, that is, f2 is not the same as f3, an intermediate frequency point f4 between f2 and f3 is calculated and its value is taken to an integral multiple of a minimum carrier interval, so as to obtain a frequency division point, the signal is divided into two parts based on the frequency division points, signal division is completed, and the division operation is finished.

It can be understood that the operations of dividing a signal into two parts are listed above, specifically, the operations of dividing a signal into n parts is similar to the operations of dividing a signal into two parts, which will not be repeated here.

In order to avoid possible gain loss caused by difference in radio frequency delay on different links, radio frequency delay compensation is performed. In some embodiments, the radio frequency transmission link BAND2 directly and completely replicates the circuit and layout of the radio frequency transmission link BAND1; similarly, the radio frequency transmission front-end BAND2 also directly and completely replicates the circuit and layout of the radio frequency transmission front-end BAND1; which not only reduces the design difficulty, but also ensures the consistency of radio frequency delay.

In other embodiments, some situations may cause the radio frequency transmission link BAND2 to fail to completely replicate the radio frequency transmission link BAND1, or the radio frequency transmission front-end BAND2 to fail to completely replicate the radio frequency transmission front-end BAND1. At this time, the signal processing and transmission system is configured to further include a delay control module, the delay control module is configured to detect and obtain a radio frequency delay T1 between the digital intermediate frequency downlink 1 and the radio frequency transmission link BAND1, a radio frequency delay T2 of the radio frequency transmission front-end BAND1, a radio frequency delay T3 between the digital intermediate frequency downlink 2 and the radio frequency transmission link BAND2, and a radio frequency delay T4 of the radio frequency transmission front-end BAND2, the delay difference is calculated as △T1=(T1+T2)-(T3+T4), and the delay difference △T1 is written into offline parameters, when the system starts, the radio frequency delay compensation is performed in the digital part based on the delay difference △T1.

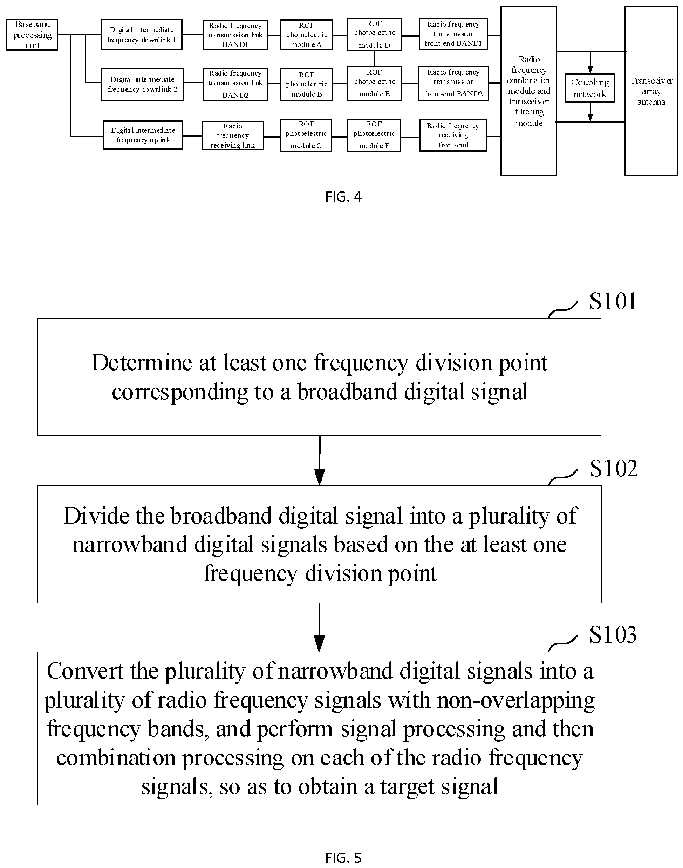

In other embodiments, as shown in FIG. 4, the signal processing and transmission system further includes a delay control module (not shown), and a coupling network connected to a receiving channel is added to an output port of the radio frequency combination module. In this way, radio frequency delay calibration is performed when the system starts or when needed. In the first step, firstly, a small signal is transmitted, a power source of a branch circuit where the digital intermediate frequency downlink 1 is located is turned on, a power source of a receiving channel corresponding to the coupling network is synchronously turned on, a power source of a branch circuit where the digital intermediate frequency downlink 2 is located is turned off, and a radio frequency delay T5 of a return signal at this moment is measured; in a second step, the power source of the branch link where the digital intermediate frequency downlink 2 is located is turned on, the power source of a receiving channel corresponding to the coupling network is synchronously turned on, and the power source of the branch link where the digital intermediate frequency downlink 1 is located is turned off, and a radio frequency delay T6 of a return signal at this moment is measured; according to T5 and T6, a delay difference is calculate as △T2=T5-T6, and radio frequency delay compensation is directly performed in the digital part based on the delay difference △T2.

The above-listed several delay compensation methods may be used to align the radio frequency delays of different radio frequency branches, thereby avoiding possible gain loss during channel combination caused by difference in radio frequency delays on different links.

In the embodiments described above, the signal processing and transmission system is configured to include a signal processing module, a plurality of radio frequency link modules, a plurality of near-end photoelectric conversion modules, a far-end photoelectric conversion module corresponding to each near-end photoelectric conversion module, and a radio frequency combination module, the signal processing module is configured to divide a broadband digital signal into a plurality of narrowband digital signals, and convert the plurality of narrowband digital signals into a plurality of radio frequency signals with non-overlapping frequency bands, after each radio frequency signal is subjected to signal adjustment processing by a corresponding radio frequency link module, a corresponding radio frequency signal that has been subjected to signal adjustment processing is converted into an optical signal by a near-end photoelectric conversion module, each optical signals is transmitted to a corresponding far-end photoelectric conversion module by an optical fiber, an optical signal is converted into an electrical signal by a far-end photoelectric conversion module, and then combination processing is performed on individual electrical signals by a radio frequency combination module, so as to obtain a target signal. Since the signal is divided, the signal bandwidth is divided as well, thereby reducing the burden on radio frequency devices such as the radio frequency link module on the link, that is, the performance pressure of the radio frequency devices is reduced.

The embodiments of the present disclosure further provide a signal processing method, please refer to FIG. 5, FIG. 5 is a flow chart of a signal processing method provided in an embodiment of the present application. The signal processing method may be applied to the signal processing and transmission system in the above embodiment, and may also be applied to other device, apparatus, etc., that includes the signal processing and transmission system in the above embodiment.

As shown in FIG. 5, the signal processing method may include steps S101 to S103.
S101: at least one frequency division point corresponding to a broadband digital signal is determined;
S102: the broadband digital signal is divided into a plurality of narrowband digital signals based on the at least one frequency division point;
S103: the plurality of narrowband digital signals are converted into a plurality of radio frequency signals with non-overlapping frequency bands, and signal processing and then combination processing are performed on each of the radio frequency signals, so as to obtain a target signal.

By way of example, one or more frequency division points are determined based on signal parameters of the broadband digital signal. The signal parameters include, but are not limited to, frequency point information, bandwidth information, etc. Then, the broadband digital signal is divided into a plurality of narrowband digital signals based on the determined one or more frequency division points, and the digital-to-analog signal conversion is performed, so as to convert the plurality of narrowband digital signals into a plurality of corresponding radio frequency signals, wherein frequency bands of the plurality of radio frequency signals do not overlap. By way of example, for the plurality of radio frequency signals, each radio frequency signal is subjected to signal adjustment processing by a corresponding radio frequency link module.

Then, the radio frequency signal that has been subjected to signal adjustment processing is converted into an optical signal of corresponding wavelength by a corresponding near-end photoelectric conversion module. Each optical signal is transmitted to a corresponding far-end photoelectric conversion module by an optical fiber, wherein each far-end photoelectric conversion module corresponds to a corresponding near-end photoelectric conversion module. The transmitted optical signal is converted into an electrical signal by the far-end photoelectric conversion module, and then the individual electrical signals are combined by the radio frequency combination module, so as to generate a signal with high-speed broadband and high performance, i.e., a target signal. Compared with directly processing and transmitting a signal with high-speed broadband, dividing a signal and then processing and transmitting the signal can reduce the performance pressure of a radio frequency device.

In some embodiments, before determining at least one frequency division point corresponding to the broadband digital signal, it includes: it is determined whether to divide the broadband digital signal; if so, the step of determining at least one frequency division point corresponding to the broadband digital signal is performed; if not, the broadband digital signal is directly converted into a radio frequency signal and subjected to signal adjustment processing by one of the radio frequency link modules, and the other radio frequency link modules enter an energy-saving mode.

In order to avoid an ineffective signal division operation, with respect to a current broadband digital signal, whether to divide the broadband digital signal is determined first, and only if it is determined to do so, the broadband digital signal is divided into a plurality of narrowband digital signals.

In some embodiments, determining whether to divide the broadband digital signal includes: a bandwidth F1 of a start frequency point and a cutoff frequency point corresponding to the broadband digital signal, a maximum signal half bandwidth F2, and a configured total bandwidth F3 are obtained; if the F1 is greater than the F2 and the F3 is greater than the F2, then it is determined to divide the broadband digital signal; if the F1 is less than or equal to the F2, or the F3 is less than or equal to the F2, then it is determined not to divide the broadband digital signal.

By way of example, a start frequency point and a cutoff frequency point corresponding to a broadband digital signal are obtained according to attribute information of the broadband digital signal. The attribute information includes, but is not limited to, a cell number to which the signal belongs, bandwidth, etc. The bandwidth F1 of the start frequency point and the cutoff frequency point is calculated and obtained according to the start frequency point and the cutoff frequency point. In addition, one-half of the maximum signal bandwidth, that is, the maximum signal half bandwidth F2, is determined according to the maximum signal bandwidth, and the configured total bandwidth F3 is obtained by query. F1 is compared with F2, if F1 is not greater than F2, that is, F1 is less than or equal to F2, then it is determined that the division of broadband digital signal will not be performed; if F1 is greater than F2, F2 is further compared with F3, if F3 is not greater than F2, that is, F3 is less than or equal to F2, then it is determined that the division of broadband digital signal will not be performed; if F3 is greater than F2, then it is determined to divide the broadband digital signal.

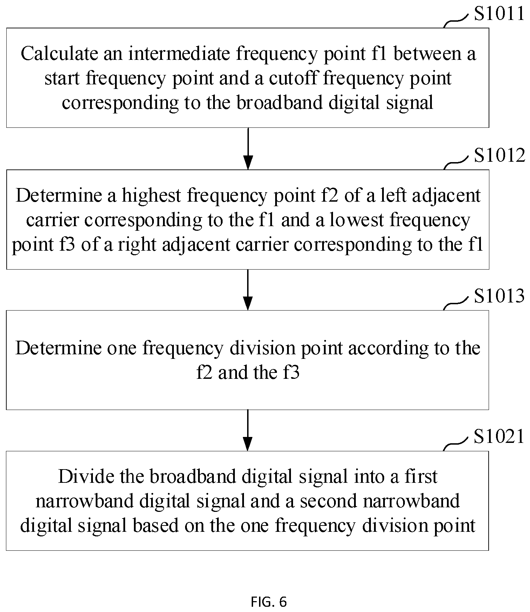

In some embodiments, as shown in FIG. 6, step S101 may include sub-steps S1011 to S1013, and step S102 may include sub-step S1021.
S1011: an intermediate frequency point f1 between a start frequency point and a cutoff frequency point corresponding to the broadband digital signal is calculated;
S1012: a highest frequency point f2 of a left adjacent carrier corresponding to the f1 and a lowest frequency point f3 of a right adjacent carrier corresponding to the f1 are determined;
S1013: one frequency division point is determined according to the f2 and the f3;
S1021: the broadband digital signal is divided into a first narrowband digital signal and a second narrowband digital signal based on the one frequency division point.

By way of example, if it is determined to divide a broadband digital signal, an intermediate frequency point f1 between a start frequency point and a cutoff frequency point corresponding to the broadband digital signal is calculated, and a highest frequency point f2 of a left adjacent carrier corresponding to the intermediate frequency point f1 is determined based on the intermediate frequency point f1, that is, the highest frequency point f2 of the nearest complete carrier that is not greater than f1, and a lowest frequency point f3 of a right adjacent carrier corresponding to the intermediate frequency point f1 is calculated, that is, the lowest frequency point f3 of the nearest complete carrier that is not less than f1. Then, one corresponding frequency division point is determined based on the highest frequency point f2 and the lowest frequency point f3. Based on the determined frequency division point, the broadband digital signal is divided into a first narrowband digital signal and a second narrowband digital signal, that is, the broadband digital signal is divided into two parts.

In some embodiments, determining one frequency division point according to the f2 and the f3 includes: if the f2 is the same as the f3, then the f2 or f3 is determined to be the frequency division point; if the f2 is not the same as the f3, then an intermediate frequency point f4 between the f2 and the f3 is calculated, and the frequency division point is determined according to the f4.

After obtaining the highest frequency point f2 and the lowest frequency point f3, the highest frequency point f2 is compared with the lowest frequency point f3; if the highest frequency point f2 is the same as the lowest frequency point f3, that is, f2 = f3, then f2 or f3 is determined as a frequency division point, and a broadband digital signal is divided into two parts based on f2 or f3. If the f2 is not the same as the f3, then an intermediate frequency point f4 between the f2 and the f3 is calculated, and the frequency division point is determined based on f4. By way of example, the frequency division point is obtained based on the value of f4 taken to an integral multiple of the minimum carrier interval, and the broadband digital signal is divided into two parts based on the frequency division point.

In the embodiments described above, by determining at least one frequency division point corresponding to a broadband digital signal, the broadband digital signal is divided into a plurality of narrowband digital signals based on the determined at least one frequency division point, then the plurality of narrowband digital signals are converted into a plurality of radio frequency signals with non-overlapping frequency bands, and signal processing and then combination processing are performed on each radio frequency signal, so as to obtain a target signal. Since the signal is divided, the signal bandwidth is divided as well, thereby reducing the burden on radio frequency devices such as the radio frequency link module on the link, that is, the performance pressure of the radio frequency devices is reduced.

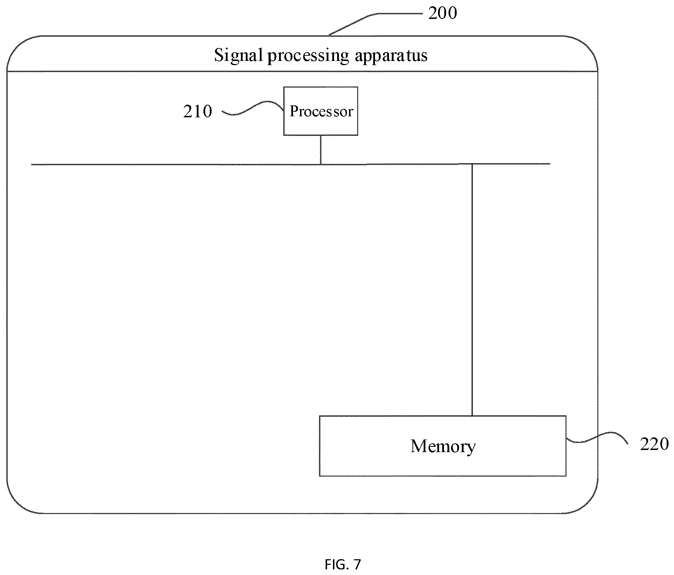

The embodiments of the present disclosure further provide a signal processing apparatus, please refer to FIG. 7, FIG. 7 is a schematic structural block diagram of a signal processing apparatus provided in an embodiment of the present application.

As shown in FIG. 7, the signal processing apparatus 200 may include a processor 210 and a memory 220, wherein the processor 210 and the memory 220 are connected via a bus, the bus is, for example, an I2C (Inter-integrated Circuit) bus.

Specifically, the processor 210 may be a micro-controller unit (MCU), a central processing unit (CPU), or a digital signal processor (DSP), etc.

Specifically, the memory 220 may be a Flash chip, a read-only memory (ROM), a disk, an optical disk, a USB disk or a mobile hard disk, etc. The memory 220 stores various computer programs executable by the processor 210.

The processor 210 is configured to run a computer program stored in the memory, and implement the following steps when executing the computer program:
determining at least one frequency division point corresponding to a broadband digital signal;
dividing the broadband digital signal into a plurality of narrowband digital signals based on the at least one frequency division point;
converting the plurality of narrowband digital signals into a plurality of radio frequency signals with non-overlapping frequency bands; and performing signal processing and then combination processing on each of the radio frequency signals to obtain a target signal.

In some embodiments, the processor 210, when determining at least one frequency division point corresponding to the broadband digital signal, is configured to implement the following steps:
calculating an intermediate frequency point f1 between a start frequency point and a cutoff frequency point corresponding to the broadband digital signal;
determining a highest frequency point f2 of a left adjacent carrier corresponding to the f1 and a lowest frequency point f3 of a right adjacent carrier corresponding to the f1; and
determining one frequency division point according to the f2 and the f3;

The processor 210, when dividing the broadband digital signal into a plurality of narrowband digital signals based on the at least one frequency division point, is configured to implement the following step:
dividing the broadband digital signal into a first narrowband digital signal and a second narrowband digital signal based on the one frequency division point.

The embodiments of the present disclosure further provide a storage medium for computer-readable storage, the storage medium stores one or more programs, and the one or more programs can be executed by one or more processors, so as to implement the steps of the signal processing method provided by any one of embodiments of the present disclosure.

The storage medium may be an internal storage unit of the signal processing apparatus described in the foregoing embodiments, for example, a hard disk or a memory of the signal processing apparatus. The storage medium may also be an external storage device of the signal processing apparatus, for example, a plug-in hard disk, a smart media card (SMC), a secure digital (SD) card, a flash card, etc., that are equipped on the signal processing apparatus.

It is to be understood by those skilled in the art that all or some of the steps, systems, and functional modules/units in the systems and devices in the methods disclosed above can be implemented as software, firmware, hardware, and suitable combination thereof.

In hardware implementations, the division among functional modules/units mentioned in the above description does not necessarily corresponds to the division among physical components; for example, a physical component can have a plurality of functions, or a function or step can be performed by several physical components in cooperation. Some or all of the physical components can be implemented as software to be executed by a processor, such as a central processor, digital signal processor, or microprocessor, or as hardware, or as an integrated circuit, such as an application specific integrated circuit. Such software can be distributed on readable storage media, the storage media can include computer storage media (or non-transitory media) and communication media (or transitory media). As is well known to those skilled in the art, the term "storage media" includes volatile and nonvolatile, removable and non-removable media implemented in any method or technology for storage of information (such as computer readable instructions, data structures, program modules, or other data). Computer storage media include, but are not limited to, RAM, ROM, EEPROM, flash memory or other memory technology, CD-ROM, digital versatile disk (DVD) or other optical disk storage, magnetic cassettes, magnetic tape, disk storage or other magnetic storage devices, or any other medium that can be used to store desired information and can be accessed by a computer. Furthermore, it is well known to those skilled in the art that communication media generally comprise computer readable instructions, data structures, program modules, or other data in a modulated data signal such as a carrier wave or other transport mechanism, and can include any information delivery media.

Preferred embodiments of the present disclosure are described above with reference to the accompanying drawings, which are not intended to limit the scope of claims of the present disclosure. Any modification, equivalent replacement and improvement that are made by those skilled in the art without departing the scope and principle of the present disclosure should fall within the scope of claims of the present disclosure.

## Claims

1. A signal processing and transmission system, comprising a signal processing module, a plurality of radio frequency link modules, a plurality of near-end photoelectric conversion modules, a far-end photoelectric conversion module corresponding to each of the near-end photoelectric conversion modules, and a radio frequency combination module, wherein
the signal processing module is configured to divide a broadband digital signal into a plurality of narrowband digital signals, and convert the plurality of narrowband digital signals into a plurality of radio frequency signals with non-overlapping frequency bands;
each of the radio frequency link modules is configured to perform signal adjustment processing on a corresponding one of the radio frequency signals;
each of the near-end photoelectric conversion modules is configured to convert corresponding radio frequency signals that have been subjected to signal adjustment processing into optical signals, each of the optical signals is transmitted to a corresponding far-end photoelectric conversion module by an optical fiber;
each of the far-end photoelectric conversion modules is configured to convert received optical signals into electrical signals; and
the radio frequency combination module is configured to perform combination processing on the individual electrical signals, so as to obtain a target signal.

2. The signal processing and transmission system according to claim 1, wherein the signal processing module is configured to:
determine whether to divide the broadband digital signal, and if so, divide the broadband digital signal into a plurality of narrowband digital signals.

3. The signal processing and transmission system according to claim 2, wherein if it is determined not to divide the broadband digital signal, the broadband digital signal is directly converted into a radio frequency signal and then subjected to signal adjustment processing by one of the radio frequency link modules, and the rest of radio frequency link modules enter an energy-saving mode.

4. The signal processing and transmission system according to claim 2, wherein the signal processing module is configured to:
determine at least one frequency division point corresponding to the broadband digital signal; and
divide the broadband digital signal into a plurality of narrowband digital signals based on the at least one frequency division point.

5. The signal processing and transmission system according to claim 2, wherein the signal processing module is configured to:
obtain a bandwidth F1 of a start frequency point and a cutoff frequency point corresponding to the broadband digital signal, a maximum signal half bandwidth F2, and a configured total bandwidth F3;
determine to divide the broadband digital signal, if the F1 is greater than the F2 and the F3 is greater than the F2; or
determine not to divide the broadband digital signal, if the F1 is less than or equal to the F2, or the F3 is less than or equal to the F2.

6. The signal processing and transmission system according to claim 5, wherein the signal processing module is configured to:
calculate an intermediate frequency point f1 between the start frequency point and the cutoff frequency point;
determine a highest frequency point f2 of a left adjacent carrier corresponding to the f1 and a lowest frequency point f3 of a right adjacent carrier corresponding to the f1;
determine one frequency division point according to the f2 and the f3; and
divide the broadband digital signal into a first narrowband digital signal and a second narrowband digital signal based on the one frequency division point.

7. The signal processing and transmission system according to claim 6, wherein the signal processing module is configured to:
determine the f2 or f3 to be the frequency division point, if the f2 is the same as the f3; or
calculate an intermediate frequency point f4 between the f2 and the f3, if the f2 is not the same as the f3, and then determine the frequency division point according to the f4.

8. The signal processing and transmission system according to claim 1, wherein the plurality of radio frequency link modules include a first radio frequency link module and a second radio frequency link module; the plurality of radio frequency signals include a first radio frequency signal and a second radio frequency signal;
the first radio frequency link module is configured to perform signal adjustment processing on the first radio frequency signal; and
the second radio frequency link module is configured to perform signal adjustment processing on the second radio frequency signal.

9. The signal processing and transmission system according to claim 1, wherein the signal processing and transmission system further comprises a plurality of radio frequency front-end modules corresponding to the plurality of radio frequency link modules, each of the radio frequency front-end modules is configured to perform signal adjustment processing on the respective electrical signals; and the radio frequency combination module is configured to perform combination processing on the individual processed electrical signals, so as to obtain the target signal.

10. The signal processing and transmission system according to any one of claims 1 to 9, wherein the signal processing and transmission system further comprises a transceiver filtering module connected to the radio frequency combination module, and the transceiver filtering module is configured to perform filtering processing on the electrical signals that have been subjected to combination processing, so as to obtain the target signal.

11. The signal processing and transmission system according to claim 10, wherein the signal processing and transmission system further comprises a delay control module, wherein the delay control module is configured to detect and obtain a sum of delays corresponding to each pair of the radio frequency link module and the radio frequency front-end module, and perform delay compensation according to the sum of delays corresponding to each pair of the radio frequency link module and the radio frequency front-end module.

12. The signal processing and transmission system according to claim 1, wherein the signal processing and transmission system further comprises a delay control module, a coupling network connected to a receiving channel is added to an output port of the radio frequency combination module, a delay of a link corresponding to the individual radio frequency signals is obtained by the coupling network, and the delay control module is configured to perform delay compensation according to the delay of the link corresponding to the individual radio frequency signals.

13. A signal processing method, applied to the signal processing and transmission system according to any one of claims 1 to 12, comprising:
determining at least one frequency division point corresponding to a broadband digital signal;
dividing the broadband digital signal into a plurality of narrowband digital signals based on the at least one frequency division point;
converting the plurality of narrowband digital signals into a plurality of radio frequency signals with non-overlapping frequency bands, and performing signal processing and then combination processing on each of the radio frequency signals, so as to obtain a target signal.

14. The signal method processing according to claim 13, wherein determining at least one frequency division point corresponding to a broadband digital signal comprises:
calculating an intermediate frequency point f1 between a start frequency point and a cutoff frequency point corresponding to the broadband digital signal;
determining a highest frequency point f2 of a left adjacent carrier corresponding to the f1 and a lowest frequency point f3 of a right adjacent carrier corresponding to the f1; and
determining one frequency division point according to the f2 and the f3; and
dividing the broadband digital signal into a plurality of narrowband digital signals based on the at least one frequency division point comprises:
dividing the broadband digital signal into a first narrowband digital signal and a second narrowband digital signal based on the one frequency division point.

15. A signal processing apparatus, comprising a processor and a memory;
the memory is configured to store a program;
the processor is configured to execute the program and implement the signal processing method according to any one of claims 13 to 14 when executing the program.

16. A storage medium for readable storage, wherein the storage medium stores one or more programs, which are executable by one or more processors, so as to implement the signal processing method according to any one of claims 13 to 14.
